**Europäisches Patentamt**

**European Patent Office**

**Office européen des brevets**

(11) Veröffentlichungsnummer: **0 066 652**
**B1**

(12) **EUROPÄISCHE PATENTSCHRIFT**

(45) Veröffentlichungstag der Patentschrift:
03.07.85

(51) Int. Cl.⁴: **H 04 Q 11/04**

(21) Anmeldenummer: 81109265.9

(22) Anmeldetag: 29.10.81

(54) Schaltungsanordnung für Zeitmultiplex-Fernmeldevermittlungsanlagen, insbesondere PCM-Fernsprechvermittlungsanlagen, mit Zeitmultiplexleitungen, deren Zeitkanäle teils für Nachrichtenverbindungen und teils zur Übertragung von Signalisierungsinformationen dienen.

(30) Priorität: 04.06.81 DE 3122300

(43) Veröffentlichungstag der Anmeldung:
15.12.82 Patentblatt 82/50

(45) Bekanntmachung des Hinweises auf die Patenterteilung:
03.07.85 Patentblatt 85/27

(84) Benannte Vertragsstaaten:
AT CH FR GB IT LI NL SE

(56) Entgegenhaltungen:
DE - A - 1 910 974
FR - A - 2 042 756

COMMUTATION ET ELECTRONIQUE, Heft 50, Juli 1975, Seiten 7 bis 17; Paris (FR)

(73) Patentinhaber: **Siemens Aktiengesellschaft, Berlin und München Wittelsbacherplatz 2, D-8000 München 2 (DE)**

(72) Erfinder: **Waas, Oskar Günther, Dipl.-Ing., Im Strähler 40, CH-8047 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verschiedene einschlägige Fachzeitschriften beschreiben bereits unter anderem PCM-Fernsprechvermittlungsanlagen, mit Zeitmultiplexleitungen, auf denen jeweils eine Mehrzahl von Zeitkanälen ein Zeitmultiplex bilden, und auf denen den Zeitkanälen unterschiedliche, sukzessive aufeinanderfolgende Zeitlagen zugeordnet sind, und auf denen die Zeitlagen in Pulsrahmen geordnet sind, und auf denen jedem einzelnen der Zeitkanäle in den verschiedenen aufeinanderfolgenden Pulsrahmen jeweils die gleiche Zeitlage zugeordnet ist, und mit mit Informationsspeichern und Haltespeichern ausgestatteten Zeitlagenvielfachen, über die Zeitkanäle auf einer eingangsseitig angeschlossenen Zeitmultiplexleitung einzeln mit Zeitkanälen auf einer ausgangsseitig angeschlossenen Zeitmultiplexleitung vermittelbar sind, und mit je einem pro Zeitmultiplex vorgesehenen und als einer von dessen Zeitkanälen zur Übertragung von einzelnen den übrigen Zeitkanälen zugeordneten Schaltkennzeichen dienenden Signalkanal, dessen Zeitlagen über eine Mehrzahl von Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens zugeordnet ist, und mit Informationsspeichern, bei denen einerseits der Schreibbetrieb gemäss im Haltespeicher gespeicherten Informationsspeicher-Speichergliedadressen abgewickelt wird, welcher entsprechend den aufeinanderfolgenden Zeitlagen der über die eingangsseitig angeschlossene Zeitmultiplexleitung geführten Kanälen zyklisch gelesen wird, und bei denen (Informationsspeichern) andererseits der Lesebetrieb entsprechend den aufeinanderfolgenden Zeitlagen der über die ausgangsseitig angeschlossene Zeitmultiplexleitung geführten Kanäle zyklisch abgewickelt wird.

In Zeitmultiplex-Fernmeldeanlagen, z.B. wie sie in der Zeitschrift «telcom report» 4. Jahrgang (1981) Beiheft beschrieben sind, ist für eine Mehrzahl von Zeitkanälen, z.B. für 30 Zeitkanäle, je ein gemeinsamer Signalkanal vorgesehen. Dieser dient zur Übertragung von Signalisierungsinformationen einzeln in Zuordnung für jeden der übrigen (30) Zeitkanäle, die als Nachrichtenkanäle für die Herstellung einzelner Verbindungen individuell und wahlfrei in Anspruch genommen werden können.

Die über eine Zeitmultiplexleitung übertragenen und den Zeitkanälen individuell entsprechenden Teilinformationen sind in ganz allgemein bekannter Weise in Pulsrahmen geordnet. Ein Pulsrahmen umfasst immer eine Reihe von Teilinformationen, von denen je eine je einem Zeitkanal zugeordnet ist. Eine der Teilinformationen ist dem Signalkanal zugeordnet. Da die dem Signalkanal innerhalb eines einzigen Pulsrahmen zugeordnete Teilinformation nicht ausreichen würde, um für die als Nachrichtenkanäle dienenden übrigen Zeitkanäle der betreffenden Zeitmultiplexleitung diesen Nachrichtenkanälen individuelle Schaltkennzeichen zu signalisieren (vgl. DE-PS 1 910 974), sind die dem Signalkanal entsprechenden Teilinformationen über mehrere Pulsrahmen hinweg zu Überpulsrahmen zusammengefasst, innerhalb derer die zeitliche Lage, also die zeitliche Relation zum jeweiligen Beginn eines jeden Überpulsrahmens, die Zuordnung einer Teilinformation individuell zu einem der als Nachrichtenkanäle verwendeten übrigen Zeitkanäle angibt. Dabei kann die dem Signalkanal zugeordnete Teilinformation innerhalb jeweils eines Pulsrahmens je einem der übrigen oder auch je zwei oder mehreren der als Nachrichtenkanäle verwendeten übrigen Zeitkanäle der betreffenden Zeitmultiplexleitung zugeordnet sein, oder es kann die Teilinformation innerhalb zweier oder mehrerer aufeinanderfolgender Pulsrahmen je einem der übrigen Zeitkanäle zugeordnet sein. Üblicherweise ist die innerhalb eines einzigen Pulsrahmens liegende, dem Signalkanal zugeordnete Teilinformation jeweils in zwei Teile je gleicher Anzahl von Bits unterteilt, von denen je einer einem der übrigen, also als Nachrichtenkänale dienenden Zeitkanäle individuell zugeordnet ist.

In Zeitmultiplex-Fernsprechvermittlungsanlagen (siehe z.B. die genannte Zeitschrift «telcom report») ist es üblich, die den Zeitkanälen jeder der Zeitmultiplexleitungen zugeordneten, der Signalisierung von Schaltkennzeichen dienenden Signalisierungsteilinformationen mit Hilfe einer dezentralen Steuereinrichtung einer Anschlussgruppe (LTG) aufzunehmen (gleiches gilt für Analog-Verbindugsleitungen und für Analog-Teilnehmerleitungen) und einem zentralen Steuerwerk zuzuleiten. Dieses verarbeitet die Signalisierungsteilinformationen und führt sie gezielt den dezentralen Steuereinrichtungen von denjenigen Anschlussgruppen zu, über die die Verbindungen weitervermittelt wurden, die über die der genannten Zeitmultiplexleitung angehörenden Zeitkanäle verlaufen.

Um nun die erhebliche Steuerwerksbelastung, die sich aus der blossen Schaltkennzeichenweitergabe mittels Signalisierungsteilinformationen ergibt, die von den Anschlussgruppen immer dem der Signalisierung von Schaltkennzeichen dienenden Zeitkanal jeder der Zeitmultiplexleitungen entnommen und danach wieder jedem dieser Zeitkanäle gemäss den Vermittlungsdaten jeder einzelnen sämtlicher durchgeschalteter Verbindungen zuzuführen sind, wesentlich herabzusetzen, wurde gemäss der DE-PS 1 910 974 eine Anordnung geschaffen, die zur Vermittlung von der Signalisierung von Schaltkennzeichen dienenden Teilinformationen aus einem Koppelfeld zur Durchschaltung von Nachrichtenverbindungen («Verbindungskoppelfeld») zusätzlich ein weiteres Koppelfeld («Signalkoppelfeld») zur Durchschaltung solcher Verbindungen vorsieht, über das die den Nachrichtenverbindungen entsprechenden und der Signalisierung von Schaltkennzeichen dienenden Teilinformationen vermittelbar sind. Diese Schaltungsanordnung geht davon aus, dass jede dieser Teilinformationen mit je einer Zuordnungsinformation versehen ist, die die Zuordnung zum jeweiligen Nachrichtenzeitkanal angibt.

Im Unterschied zu der durch die genannte Patentschrift bekannten Anordnung geht die Erfindung davon aus, dass eine Zuordnungsinformation der zuvor erwähnten Art nicht vorgesehen zu sein braucht, und dass diese Zuordnung — wie oben bereits er-

währt — aus der zeitlichen Relation zum jeweiligen Beginn eines jeden Überpulsrahmens resultiert. Diese Voraussetzung, die also auf einem vorteilhaften Wegfall der genannten besonderen Zuordnungsinformation beruht, macht es erforderlich, die Vermittlung der der Signalisierung von Schaltkennzeichen dienenden Teilinformationen auf andere Weise zu ermöglichen.

Die Erfindung bezieht sich auf eine Schaltungsanordnung für Zeitmultiplex-Fernmeldevermittlungsanlagen, insbesondere PCM-Fernsprechvermittlunsanlagen, mit Zeitmultiplexleitungen, auf denen jeweils eine Mehrzahl von Zeitkanälen ein Zeitmultiplex bilden, und auf denen den Zeitkanälen unterschiedliche, sukzessive aufeinanderfolgende Zeitlagen zugeordnet sind, und auf denen die Zeitlagen im Pulsrahmen geordnet sind, und auf denen jedem einzelnen der Zeitkanäle in den verschiedenen aufeinanderfolgenden Pulsrahmen jeweils die gleiche Zeitlage zugeordnet ist, und mit mit Informationsspeichern und Haltespeichern ausgestatteten Zeitlagenvielfachen, über die Zeitkanäle auf einer eingangsseitig angeschlossenen Zeitmultiplexleitung einzeln mit Zeitkanälen auf einer ausgangsseitig angeschlossenen Zeitmultiplexleitung vermittelbar sind, und mit je einem pro Zeitmultiplex vorgesehenen und als einer von dessen Zeitkanälen zur Übertragung von einzeln den übrigen Zeitkanälen zugeordneten Schaltkennzeichen dienenden Signalkanal, dessen Zeitlagen über eine Mehrzahl von Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens zugeordnet ist, und mit je einem ersten Informationsspeicher, der zur Durchschaltung der über die Nachrichtenkanäle übertragenen Teilinformationen dient, und bei dem der Lesezyklus der Pulsrahmendauer entspricht, und mit einem zweiten Informationsspeicher, dessen Umlaufzyklus demgemäss einer Überpulsrahmendauer entspricht, die ein Mehrfaches der Pulsrahmendauer beträgt, und der zur Durchschaltung der Signalkanal-Teilinformationen zwischen den Signalkanälen der eingangsseitig und ausgangsseitig angeschlossenen Zeitmultiplexleitungen dient.

Eine Schaltungsanordnung dieser Art ist bereits in der Zeitschrift «COMMUTATION ET ELECTRONIQUE»; Heft 50, Juli 1975, Seiten 7 bis 17, enthalten. In diesem bekannten Falle erfolgt das Einschreiben der Nachrichtenkanal-Teilinformationen und der Signalkanal-Teilinformation in die beiden Speicher zyklisch. Da der Schreibzyklus für die Nachrichtenkanal-Teilinformationen einerseits und für die Signalkanal-Teilinformationen andererseits unterschiedlich ist, ergeben sich für eine dementsprechende Schreibeinrichtung sehr schwierige Funktionsbedingungen. Sie muss nämlich die Nachrichtenkanal-Teilinformationen in der ihnen entsprechenden Aufeinanderfolge erfassen und dem einen Speicher zuführen, während sie die Signalkanal-Teilinformationen in einer anderen Aufeinanderfolge erfassen muss und dem anderen Speicher zuzuführen hat.

Für die Erfindung besteht ganz allgemein die Aufgabe, in einer Schaltungsanordnung der zuletzt genannten bekannten Art eine Vermittlung von der Signalisierung von Schaltkennzeichen dienenden und hierzu individuell den Nachrichtenkanälen zugeordneten Teilinformationen zu ermöglichen, um das zentrale Steuerwerk und die dezentralen Steuereinrichtungen von der Aufgabe der Schaltkennzeichenweitergabe zu entlasten. Im Blick auf die zuletzt genannte bekannte Anordnung, von der die Erfindung ausgeht, besteht speziell die Aufgabe, die für die Schreibvorgänge bestehenden Funktionsbedingungen zu erleichtern, um entsprechende Schreibeinrichtungen für die Speicherung von Nachrichtenkanal-Teilinformationen und Signalkanal-Teilinformationen zu vereinfachen.

Diese Aufgabe wird erfindungsgemäss dadurch gelöst, dass bei dem ersten Informationsspeicher einerseits der Schreibbetrieb gemäss im Haltespeicher gespeicherten Informationsspeicher-Speichergliedadressen abgewickelt wird, welcher entsprechend den aufeinanderfolgenden Zeitlagen der über die eingangsseitig angeschlossene Zeitmultiplexleitung geführten Kanäle zyklisch gelesen wird, und bei dem (ersten Informationsspeicher) andererseits der Lesebetrieb entsprechend den aufeinanderfolgenden Zeitlagen der über die ausgangsseitig angeschlossene Zeitmultiplexleitung geführten Kanäle zyklisch abgewickelt wird, und dass die Weiterschaltung des zweiten Informationsspeichers im Lesebetrieb um einen einer Signalkanal-Teilinformation entsprechenden Schritt mit jedem Lesezyklus des ersten Informationsspeichers erfolgt, und dass im ersten Informationsspeicher die über die eingangsseitigen Kanäle eintreffenden Teilinformationen mit Ausnahme der Signalkanal-Teilinformation und an in dem zweiten Informationsspeicher entsprechend dem genannten Mehrfachen vorgesehenen mehreren Informationsspeicherplätzen die in der stets wiederkehrenden Reihenfolge ihrer Zeitlagen innerhalb jedes der Überpulsrahmen eintreffenden Signalkanal-Teilinformationen gemäss den im Haltespeicher gespeicherten Informationsspeicher-Speichergliedadressen gespeichert werden, und dass regelmässig bei Erreichen der Signalkanal-Zeitlage — also einer der Pulsrahmen-Zeitlagen — beim zyklischen Lesevorgang des ersten Informationsspeichers der Lesevorgang des zweiten Informationsspeichers um einen einer Signalkanal-Teilinformation entsprechenden Schritt fortgesetzt wird, woraufhin wieder der Lesevorgang des ersten Informationsspeichers fortgesetzt wird.

Die Erfindung schafft ganz allgemein die Möglichkeit, die jedem der Nachrichtenkanäle zugehörigen Signalisierinformationen ebenfalls über ein Zeitmultiplexkoppelfeld durchzuschalten und zwar auch unter der Voraussetzung, dass die Signalisierinformationen keine zusätzlichen Zuordnungsinformationen aufweisen, die eine Zuordnung der jeweiligen Signalisierinformation zu einem der als Nachrichtenkanäle verwendeten übrigen Kanäle angeben würden. Dies hat besondere Bedeutung für sogenannte Standverbindungen; das sind über Kanäle, im vorliegenden Falle also Zeitmultiplexkanäle, durchgeschaltete Verbindungen, die über längere Zeit im durchgeschalteten Zustand bestehen bleiben, und zur Direktverbindung anderer Vermittlungsstellen miteinander dienen, und über die einzelne gewählte Verbindungen nacheinander aufgebaut und auch wieder ausgelöst werden, ohne dass die Steuerorgane der betreffenden Vermittlungsstelle, in der solche Standverbindungen durchgeschaltet sind, selbst etwas mit der Schaltkennzeichenweitergabe in der weiter oben erwähnten Weise zu tun haben.

Gegenüber der in der genannten fremdsprachigen Zeitschrift enthaltenen Schaltungsanordnung erfolgen die Schreibvorgänge für die Nachrichtenkanal-Teilinformationen sowie für die Signalkanal-Teilinformationen gemäss den im Haltespeicher gespeicherten Informationen, während die Lesevorgänge für beiderlei Informationen zyklisch abgewickelt werden, und zwar zyklisch ineinander greifend bezüglich der Nachrichtenkanal-Teilinformationen einerseits und der Signalkanal-Teilinformationen andererseits. Insgesamt wird dadurch die in einem Zeitlagenvielfach durchzuführende Zwischenspeicherung der Teilinformationen beiderlei Art vereinfacht, weil das zyklische Ineinandergreifen beim Lesen der betreffenden Speicher besser beherrschbar und insofern günstiger und einfacher realisierbar ist, als es bei der Abwicklung der der Speicherung der Informationen beiderlei Art durch die Schreibvorgänge ist.

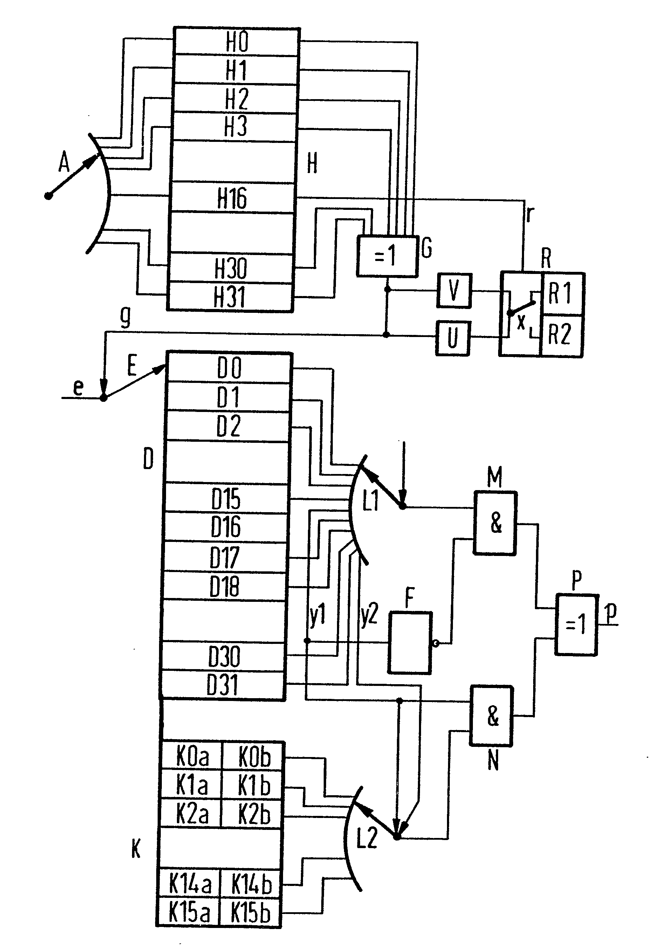

In der Zeichnung ist ein Ausführungsbeispiel der Erfindung nur in wesentlich zu ihrem Verständnis beitragenden Bestandteilen dargestellt. Die nachfolgende Beschreibung, die zunächst die allgemeinen Zusammenhänge und Funktionen des erfindungsgemässen Ausführungsbeispiels behandelt und erst weiter unten auf seine erfindungsgemässen Besonderheiten eingeht, setzt ein für PCM-Verbindungen ausgelegtes mehrstufiges Koppelfeld, das teils aus Zeitstufen und teils aus Raumstufen aufgebaut ist, als für den Fachmann bereits vielfältig bekannt voraus; beispielsweise ist in der DE-AS 21 08 745, insbesondere Fig. 1 nebst Beschreibung, ein derartiges Koppelfeld dargestellt und beschrieben.

In der Zeichnung ist ein Zeitlagenvielfach dargestellt. Eine ankommende Zeitmultiplexleitung ist mit e und eine abgehende Zeitmultiplexleitung mit p bezeichnet.

Das dargestellte Zeitlagenvielfach ist Bestandteil einer grösseren PCM-Zeitmultiplexkoppelanordnung. Zur Herstellung einer Verbindung wird in an sich bekannter Weise mit Hilfe einer Wegesucheinrichtung ein freier Verbindungsweg gesucht und ausgewählt, der über freie Verbindungskanäle der Zeitmultiplexleitungen aufgebaut werden kann. Im Zusammenhang hiermit sind Haltespeicher vorgesehen. Der Haltespeicher H ist dem dargestellten Zeitlagenvielfach zugeordnet. Ebenso sind Haltespeicher weiteren, nicht dargestellten Zeitlagenvielfachen und Raumlagenvielfachen zugeordnet.

Die zuvor erwähnten Haltespeicher dienen zur Speicherung von Vermittlungsdaten, die die Zuordnung abgehender Zeitkanäle zu ankommenden Zeitkanälen jeweils innerhalb eines der genannten Vielfache angeben. Diese Zuordnung entspricht den Durchschaltedaten für jeweils eine Verbindung in einem Raumkoppelvielfach konventioneller Art (Eingangskoordinatenleitungsnummer/Ausgangskoordinatenleitungsnummer).

Vermittlungsdaten werden bekanntlich mit Hilfe einer Wegesucheinrichtung jeweils für eine Verbindung anhand von in einem Belegungsspeicher (in Anlagen älterer Bauart: Wegesuchnetzwerk) gespeicherten Daten über den Zustand (frei oder belegt) aller massgeblichen Teile des Koppelfeldes, hauptsächlich der Zwischenleitungen, durch informationsverarbeitende Verknüpfungsvorgänge ermittelt. Diese Vermittlungsdaten geben eindeutig den Verlauf einer über das mehrstufige Koppelfeld durchzuschaltenden und durchgeschalteten Verbindung hinsichtlich der dabei in Anspruch genommenen Zwischenleitungen und Koppelpunkte bzw. Zeitmultiplexleitungen, Zeitkanäle, Zeitlagen usw. an. Auch im vorliegenden Falle finden solche Wegesuchvorgänge für jede durchschaltende Verbindung statt. Handelt es sich dabei anstatt um eine Einkanalverbindung um eine Mehrkanalverbindung, so können mehrere solcher Wegesuchvorgänge einzeln für die dabei erforderlichen mehreren Verbindungsherstellungsvorgänge durchgeführt werden.

Die mittels Wegesuchvorgängen ermittelten Vermittlungsdaten werden — soweit sie eine über die betreffende Zeitmultiplexkoppelanordnung führende Verbindung betreffen — in Haltespeichern der Zeitlagenvielfache und der Raumlagenvielfache gespeichert. Bei den Zeitlagenvielfachen sind den Kanalnummern der ankommenden Zeitkanäle die Speicherplätze des jeweils zugeordneten Haltespeichers bleibend zugeordnet. Die über die ankommenden Zeitkanäle einer PCM-Zeitmultiplexleitung pro Pulsrahmen eintreffenden verbindungsindividuellen Teilinformationen werden gemäss den Vermittlungsdaten, die die Zuordnung der abgehenden Zeitkanäle zu den ankommenden Zeitkanälen angeben und pro ankommenden Zeitkanal auf je einem der Speicherplätze eines Haltespeichers in Form von Speicherplatzadressen der Vollspeicher gespeichert sind, in den dem betreffenden Zeitlagenvielfach jeweils zugeordneten Vollspeicher, z.B. D, eingeschrieben. Im Gegensatz hierzu erfolgt der Lesebetrieb, der einer Weitergabe dieser Teilinformationen einzeln über die abgehenden Zeitkanäle dient, zyklisch. In einem Haltespeicher ist also pro ankommenden Zeitkanal auf einem jeweils diesem bleibend zugeordneten Speicherplatz angegeben, unter welcher Vollspeicher-Speicherplatzadresse die über diesen Zeitkanal sukzessive eintreffenden Teilinformationen eingeschrieben, d.h. zwischengespeichert werden müssen.

Den Zeitkanälen einer abgehenden Zeitmultiplexleitung sind — wie erläutert — die Speicherplätze des Vollspeichers D fest zugeordnet. Zwecks Weitergabe der zwischengespeicherten Teilinformationen aus dem Vollspeicher werden folglich seine Speicherplätze gemäss den Zeitlagen der abgehenden Zeitkanäle zyklisch angesteuert. Hierzu dient die Leseeinrichtung L1.

Das zyklische Lesen der über eine von einem PCM-Zeitlagenvielfach ausgehenden Zeitmultiplexleitung, z.B. p, auszusendenden Teilinformationen aus dem Vollspeicher, z.B. D, des Zeitlagenvielfaches erfolgt also mit Hilfe der Leseeinrichtung L. Die Leseeinrichtung des Zeitlagenvielfaches wird also zwecks Abwicklung dieses zyklischen Lesens kontinuierlich weitergeschaltet. Dagegen erfolgt das Einschreiben der über die an dem PCM-Zeitlagenvielfach ankommende Zeitmultiplexleitung eintreffenden Teilinformationen mit Hilfe des Haltespeichers H.

Nachdem die Beschreibung bisher in allgemeinerer Weise die Zusammenhänge und Funktionen des erfindungsgemässen Ausführungsbeispieles behandelt hat, geht sie nun vermehrt auf seine erfindungsgemässen Besonderheiten ein.

Im ORANGE BOOK, VOLUME III-2, Empfehlung Rec. G. 732 (LINE TRANSMISSION/ 4. Signalling, Seiten 429ff.) der SIXTH PLENARY ASSEMBLY (27.9.-8.10.1976) des INTERNATIONAL TELEGRAPH AND TELEPHONE CONSULTATIVE COMMITTEE (CCITT) ist ein PCM-Zeitmultiplexsystem beschrieben, in dem auf einer Zeitmultiplexleitung 32 Kanäle durch Zeitvielfachteilung gebildet sind. Ein Kanal (Kanal 0) dient u.a. zur Übertragung eines Rahmenkennungszeichens, wodurch die Zeitlage der Pulsrahmengrenzen angegeben wird. Ein weiterer Kanal (Kanal 16 = Signalisierkanal) dient zur Übertragung von Signalisierinformation für alle übrigen 30 Kanäle, die als Nachrichtenkanäle verwendbar und hierzu bei Herstellung individueller Verbindungen einzeln und wahlfrei in an sich bekannter Weise belegbar sind. Signalisierinformationen dienen in an sich bekannter Weise zur Kennzeichnung des Anfangs und des Endes von Schaltkennzeichen, z.B. Wahlendekennzeichen, Beginnzeichen, Schlusszeichen, Zählimpulsen und dergleichen, die in Zusammenhang einer jeweils aufgebauten Verbindung ausser der eigentlichen Nachrichteninformation zu übertragen sind.

Die pro Kanal und pro Pulsrahmen übertragbaren Teilinformationen werden auch als «Worte» bezeichnet. Ein Wort umfasst immer eine Folge von 8 bit pro Kanal und pro Pulsrahmen.

Da nun 8 bit zur Signalisierung von Schaltkennzeichen für die als Nachrichtenkanäle verwendbaren 30 genannten Kanäle nicht ausreichen würden, sind die Worte jeweils der sechzehnten Zeitlage von insgesamt 16 aufeinanderfolgenden Pulsrahmen zu einem Überpulsrahmen zusammengefasst. Eines dieser Worte dient u.a. zur Kennzeichnung der Zeitlage der Überpulsrahmengrenzen. Von den übrigen 15 Worten des Signalisierkanals dient je eines zur Signalisierung für zwei Nachrichtenkanäle. Jedes dieser Worte besteht aus 8 bit. Die ersten vier bit — auch als «Halbwort» bezeichnet — sind immer einem Nachrichtenkanal und die weiteren vier bit — ebenfalls als «Halbwort» bezeichnet — eines Wortes sind einem weiteren Nachrichtenkanal fest zugeordnet. Folglich ergibt sich die Zuordnung eines jeden Halbwortes zu einem Nachrichtenkanal einerseits aus der Zeitlage des betreffenden Wortes im Signalisierkanal in Relation zu dessen Überpulsrahmengrenzen und andererseits daraus, ob das betreffende Halbwort innerhalb dieses Wortes an erster oder an zweiter Stelle steht. Diese Zuordnung ist also generell festgelegt und bedarf keiner Zuordnungsinformation, wie es in der DE-PS 19 10 974 beschrieben wird.

In der Zeichnung ist auszugsweise ein Zeitlagenvielfach dargestellt. Es ist Bestandteil eines mehrstufigen Koppelfeldes einer PCM-Fernsprechvermittlungsanlage. Eingangsseitig ist an das Zeitlagenvielfach die Zeitmultiplexleitung e angeschaltet. Ausgangsseitig ist an das Zeitlagenvielfach die Zeitmultiplexleitung p angeschaltet. Über diese Zeitmultiplexleitungen sind die genannten 32 Zeitkanäle geführt. Sie bilden in an sich bekannter Weise auf jeder der beiden Zeitmultiplexleitungen jeweils ein Zeitmultiplex. Den Zeitkanälen sind unterschiedliche, sukzessive aufeinanderfolgende Zeitlagen fest zugeordnet. Diese Zeitlagen sind in bekannter Weise in Pulsrahmen geordnet. Jedem einzelnen der Zeitkanäle ist in den verschiedenen aufeinanderfolgenden Pulsrahmen jeweils die gleiche Zeitlage zugeordnet.

Das Zeitlagenvielfach ist mit zwei Informationsspeichern D und K und einem Haltespeicher H ausgestattet. Über das Zeitlagenvielfach gemäss Zeichnung sind die Zeitkanäle auf der eingangsseitigen Zeitmultiplexleitung e einzeln mit den Zeitkanälen auf der ausgangsseitigen Zeitmultiplexleitung p vermittelbar.

Einer der Zeitkanäle dient zur Übertragung von einzeln den übrigen Zeitkanälen zugeordneten Schaltkennzeichen. Dieser Kanal wird als «Signalkanal» oder auch (zuvor) als «Signalisierkanal» bezeichnet. Es wurde bereits beschrieben, dass dessen Zeitlagen über eine Mehrzahl von Pulsrahmen hinweg zu ebenso wie die Pulsrahmen sukzessive aufeinanderfolgenden Überpulsrahmen zusammengefasst sind; wie ebenfalls bereits beschrieben, sind die Zeitlagen innerhalb der Überpulsrahmen den übrigen Zeitkanälen, die verbindungsindividuell als Nachrichtenkanäle dienen, fest zugeordnet. Die in dieser festen Zuordnung liegende zeitliche Relation der als Signalisierinformationen dienenden Halbworte legt fest, welchem der als Nachrichtenkanäle dienenden Zeitmultiplexkanäle jeweils ein Halbwort zum Zwecke der Schaltkennzeichensignalisierung zugeordnet ist.

Bei dem Informationsspeicher D, der zuvor wiederholt auch als «Vollspeicher» bezeichnet wurde, wird (s. o.!) der Schreibbetrieb gemäss im Haltespeicher gespeicherten Informationsspeicher-Speichergliedadressen abgewickelt. Hierzu dient eine Schreibeinrichtung E. Der Lesebetrieb wird dagegen entsprechend den aufeinanderfolgenden Zeitlagen der über die ausgangsseitig angeschlossene Zeitmultiplexleitung p geführten Kanäle zyklisch abgewickelt. Der Haltespeicher H wird entsprechend den aufeinanderfolgenden Zeitlagen der über die eingangsseitig angeschlossene Zeitmultiplexleitung e geführten Kanäle zyklisch gelesen.

Wie aus der Zeichnung zu entnehmen ist, weist der Informationsspeicher D Informationsspeicherglieder D0 bis D15 und D17 bis D31 auf. Wie bekannt, dient jeweils der erste Signalkanal u.a. zur Übertragung des Pulsrahmenkennungswortes. Dies dient in bekannter Weise der Synchronisierung. Die Informationsspeicherglieder D1 bis D15 und D17 bis D31 dienen der Aufnahme der sukzessive nacheinander über die Zeitmultiplexleitung e eintreffenden PCM-Worte der als Nachrichtenkanäle dienenden Kanäle dieser Zeitmultiplexleitung. Demgemäss wird die Schreibeinrichtung E zum Empfang jedes dieser PCM-Worte mit Hilfe der im Haltespeicher H gespeicherten Informationsspeicher-Speichergliedadressen jeweils auf ein dadurch bestimmtes Informationsspeicherglied eingestellt.

Zwischen dem Informationsspeicherglied D15

und dem Informationsspeicherglied D17 befindet sich das Informationsspeicherglied D16. Hiervon ist weiter unten noch im einzelnen die Rede. Ausserdem ist noch ein weiterer Informationsspeicher K vorgesehen. Er wird im folgenden immer als «Signalisierinformationsspeicher» bezeichnet. Seine Speicherglieder K0a/K0b bis K15a/K15b dienen der Aufnahme der Signalisierinformationen. Das erste dieser Informations-Speicherglieder K0a/K0b dient u.a. zur Aufnahme des Überpulsrahmenkennungswortes. Die weiteren Informations-Speicherglieder K1a/K1b bis K15a/K15b dienen zur Aufnahme der der Signalisierung von Schaltkennzeichen dienenden Halbworte. Jedes dieser Speicherglieder, z.B. K0a/K0b ist in zwei Teile, z.B. K0a und K0b unterteilt. Ein solches Speicherglied umfasst insgesamt 8 bit, jedes seiner beiden Teile umfasst folglich 4 bit Speicherkapazität. Jeder der beiden Teile dieser Speicherglieder K1a/K1b bis K15a/K15b ist jeweils einem der als Nachrichtenkanäle verwendeten übrigen Kanäle fest zugeordnet, die über die abgehende Zeitmultiplexleitung p verlaufen.

Wie bereits ausgeführt, dient von den über den Signalkanal übertragenen PCM-Worten das erste innerhalb eines Überpulsrahmens u.a. zur Übertragung des Überpulsrahmenkennungswortes. Das zweite dieser PCM-Worte umfasst die beiden der Signalisierung von Schaltkennzeichen dienenden Halbworte, die zwei ersten der als Nachrichtenkanäle dienenden (z.B. Kanäle 1 und 2) übrigen Zeitkanäle zugeordnet sind. Entsprechendes gilt für die weiteren über den Signalkanal übertragenen PCM-Worte («Teilinformationen»).

Wie ausgeführt wurde, wird die Schreibeinrichtung E des Informationsspeichers D gemäss den im Haltespeicher H gespeicherten Informationsspeicher-Speichergliedadressen eingestellt. Diese Einstellung erfolgt für jede über die Zeitmultiplexleitung e eintreffende Teilinformation erneut und gesondert. Die in den als Nachrichtenkanäle dienenden Kanälen auf der Zeitmultiplexleitung e übertragenen Teilinformatione werden mit Hilfe von im Haltespeicher H gespeicherten Informationsspeicher-Speichergliedadressen in den Informationsspeichergliedern D1 bis D15 und D17 bis D31 nach Massgabe dieser Adressen eingeschrieben. Dagegen werden die in den als Signalisierkanal verwendeten Kanal auf der Zeitmultiplexleitung e übertragenen Teilinformationen in dem Signalisierinformationsspeicher K gespeichert. Dies wird anschliessend genauer beschrieben.

Wie erwähnt, sind im Signalisierinformationsspeicher K die Speicherglieder, z.B. K1a/K1b, in zwei Teile z.B. K1a und K1b geteilt. Jeder dieser Teile ist einem der als Nachrichtenkanäle verwendeten übrigen Kanäle fest zugeordnet, die über die abgehende Zeitmultiplexleitung p verlaufen. Folglich dient immer eines dieser Signalisierinformationsspeicherglieder der Aufnahme der Signalisierinformation zweier zeitlich aufeinanderfolgender Kanäle auf der Zeitmultiplexleitung p. Folglich ist die über die Zeitmultiplexleitung e im Signalkanal mit der Zeitlage 16 eintreffende Signalisierinformation, die ja je Pulsrahmen immer aus zwei Halbworten besteht, von denen jedes einem von zwei zeitlich aufeinanderfolgenden Känalen auf der Zeitmultiplexleitung e zugeordnet ist, in zwei Speichergliedern des Signalisierinformationsspeichers K zu speichern, d.h. jedes der beiden Halbworte, die in einer eintreffenden Signalisierinformation im Kanal 16 enthalten ist, ist unabhängig vom jeweils anderen Halbwort zu speichern. Zu diesem Zweck sind dem Haltespeicher H ausser den Speichergliedadressen der Informationsspeicherglieder D0 bis D31 auch die Speichergliedadressen der Speicherglieder K0a/K0b bis K15a/K15b des Signalisierinformationsspeichers K entnehmbar. Da die Zuordnung je eines Kanals auf der ankommenden Zeitmultiplexleitung zu je einem Kanal auf der abgehenden Zeitmultiplexleitung die Zuordnung ihrer Zeitlagen innerhalb von Pulsrahmen bedeutet, gilt diese Zuordnung auch für die Zeitlagen der Halbworte der der Signalisierung dienenden Teilinformationen innerhalb der Überpulsrahmen.

Um nun dem Haltespeicher auch die Speichergliedadressen zur Ansteuerung der Speicherglieder des Signalisierinformationsspeichers H entnehmen zu können, ist dieser mit einem Speicher R und einem Vergleicher V und einem Umsetzer U ausgestattet. Zur Erläuterung von deren Arbeitsweise sei zunächst vorausgesetzt, dass im Speicher R der Inhalt des Haltespeichergliedes H2 gespeichert sei. Die Leseeinrichtung A des Haltespeichers H, die kontinuierlich zyklisch weitergeschaltet wird und das jeweils erreichte Haltespeicherglied, z.B. H1 veranlasst, seinen Speicherinhalt zerstörungsfrei zur Gatterschaltung G hin abzugeben, möge also das Haltespeicherglied H1 erreicht haben. Da im Speicher R der Inhalt des Haltespeichergliedes H2 gespeichert ist, und über das Gatter G der Inhalt des Haltespeichergliedes H1 auf die Leitung g gegeben wird, und da die Inhalte der verschiedenen Haltespeicherglieder sämtlich voneinander verschieden sein müssen, weil sie lauter verschiedene Informationsspeichergliedadressen darstellen, empfängt der Vergleicher V über seinen in der Zeichnung rechten und linken Eingang unterschiedliche Informationsspeichergliedadressen, woraufhin er nicht reagiert. Dies möge bei Erreichen der vorigen Informationsspeicherglieder durch die Leseeinrichtung A ebenso gewesen sein.

Anschliessend (also nach Erreichen des Speichergliedes H1) erreicht die Leseeinrichtung A das Haltespeicherglied H2 und veranlasst in beschriebener Weise die Weitergabe von dessen Speicherinhalt zerstörungsfrei (also ohne Löschung des Speichergliedinhaltes bei H2) über das Gatter G und die Steuerleitung g zur Schreibeinrichtung E des Informationsspeichers D. Dieser Speicherinhalt, also eine bestimmte Informationsspeichergliedadresse, gelangt — wie erwähnt — auch zum Vergleicher V. Dieser stellt nun Übereinstimmung mit dem Speicherinhalt des Speichers R fest und veranlasst dessen Löschung. Ferner registriert der Vergleicher diese Übereinstimmung, um nach Weiterschaltung der Leseeinrichtung A zum nächsten Haltespeicherglied H3 dessen Speicherinhalt im Speicher R einzuschreiben. Der Vergleicher V stellt dann anschliessend bei jeder weiteren Weiterschaltung der Leseeinrichtung A wieder Ungleichheit fest und reagiert demzufolge nicht und reagiert in der beschriebenen Weise erst wieder, wenn sie das Haltespeicherglied H3 erreicht, wo sie also wieder die Übereinstimmung feststellt.

Zuvor aber, und zwar wenn die Leseeinrichtung A das Haltespeicherglied H16 erreicht, gibt sie über die Ausgabeleitung r eine Abrufinformation, die in diesem Haltespeicherglied permanent gespeichert sein möge, zum Speicher R. Dieser gibt daraufhin seinen Speicherinhalt zu einem Umsetzen U hin ab. Dieser Speicherinhalt gibt ja für die in einer bestimmten Zeitlage auf der Zeitmultiplexleitung e eintreffende jeweilige Teilinformation die neue Zeitlage an, in der diese Teilinformation auf der Zeitmultiplexleitung p wieder zur Aussendung kommen muss. In diesem Speicherinhalt liegt die Zuordnungsinformation, die sich — wie oben beschrieben — aus der Wegesuche ergibt.

An dieser Stelle ist zur Präzisierung der bereits gegebenen Erläuterungen nachzuholen, dass der Speicher R tatsächlich zweiteilig ist (R1, R2!) und dass der Vergleicher V mittels eines Umschalters x, der nur der einfacheren Darstellung wegen als mechanischer Kontakt wiedergegeben, tatsächlich aber elektronisch wirkend ausgebildet ist, und der bei jedem Weiterschaltevorgang der Schreibeinrichtung A seine Lage wechselt, kontinuierlich abwechselnd mit dem einen Teilspeicher R1 und dem anderen Teilspeicher R2 verbunden wird. Erreicht nun die Leseeinrichtung A ein Haltespeicherglied, bei dem der Vergleicher V die erläuterte Übereinstimmung zwischen Haltespeichergliedinhalt und Teilspeicherinhalt feststellt, so registriert sie diese Übereinstimmung in der beschriebenen Weise. Erreicht die Leseeinrichtung danach das nächste Haltespeicherglied, wobei also der Kontakt x seine Lage wechselt, so stellt der Vergleicher V erneut die Übereinstimmung zwischen dem Inhalt dieses Haltespeichergliedes und dem Inhalt des anderen der beiden Teilspeicher (R1, R2) fest und registriert auch diese Übereinstimmung. Wird die Leseeinrichtung A danach auf das nächste Haltespeicherglied weitergeschaltet, so bewirkt der Vergleicher in der beschriebenen Weise aufgrund der ersten registrierten Übereinstimmung, dass der Inhalt des Speicherteiles R1 gelöscht wird und dass statt dessen der Speicherinhalt desjenigen Haltespeichergliedes eingeschrieben wird, auf das die Leseeinrichtung A z.Zt. eingestellt ist. Anschliessend, wenn die Leseeinrichtung A erneut weitergeschaltet wird, wird auch der Inhalt des anderen Teilspeichers R2 gelöscht und statt dessen der Inhalt desjenigen Haltespeichergliedes eingeschrieben, auf das die Leseeinrichtung A zu diesem Zeitpunkt eingestellt ist.

Auf die zuvor beschriebene Weise wird bewerkstelligt, dass immer zwei Zuordnungsinformationen im Speicher R, und zwar je für sich in seinen Teilspeichern R1 und R2, gespeichert vorliegen. Diese beiden Zuordnungsinformationen geben für zwei ausgangsseitigen Kanäle deren zeitlagenmässige Zuordnungen zu zwei zeitlich aufeinanderfolgenden eingangsseitigen Kanälen an. Diese Zuordnungsinformationen sind nun auch für die beiden Halbworte vermittlungstechnisch massgebend, die zwecks Signalisierung von Schaltkennzeichen diesen beiden Kanälen zugeordnet sind. Da diese Zuordnungsinformationen für die über zwei im Zeitmultiplex aufeinanderfolgende Kanäle übertragenen beiden Teilinformationen deren Sendezeitlagen angeben, also die Zeitlagen der betreffenden beiden abgehenden Kanäle, werden sie zu vermittlungstechnischem Zweck auch für die diesen Kanälen zugeordneten Halbworte verwendet. Hierzu sind sie in den Speicherteilen R1 und R2 gespeichert.

Erreicht die Leseeinrichtung A das Haltespeicherglied H16, so gelangt die bereits erwähnte Abrufinformation über die Ausgabeleitung r zum Speicher R. Hierdurch wird dieser veranlasst, zunächst seine im Teilspeicher R1 gespeicherte Zuordnungsinformation zum Umsetzer U hin abzugeben, der sie in eine Speichergliedadresse zur Ansteuerung eines der Speicherglieder K0a/K0b bis K15a/K15b und eine Positionsangabe umsetzt. Die Schreibeinrichtung E wird nun mittels dieser Speichergliedadresse auf das betreffende Signalisierinformationsspeicherglied des Signalisierinformationsspeichers K eingestellt. Sodann wird das erste der beiden über den Signalkanal 16 eintreffenden Halbworte in das betreffende Speicherglied des Speichers K eingeschrieben. Massgebend hierfür ist die erwähnte Positionsangabe. Sie sagt aus, ob diese Halbworte in den einen oder den anderen Teil des betreffenden Speichergliedes (z.B. K1a oder K1b) einzuschreiben ist. Dies richtet sich nach der vermittlungstechnischen Zuordnung der entsprechenden beiden Kanäle, also des betreffenden abgehenden zu dem betreffenden ankommenden Kanal. Diese Zuordnung findet ausser in der Speichergliedadresse, mit deren Hilfe die Schreibeinrichtung E gesteuert wird, auch in der Positionsangabe ihren Ausdruck, die zwei Wertigkeiten haben kann.

In der gleichen Weise wird die Schreibeinrichtung E danach durch den umgesetzten (U) Speicherinhalt des Speicherteiles R2 auf ein Speicherglied des Speichers K eingestellt. Dies geschieht noch innerhalb der Empfangszeitlage 16. Das zweite der beiden Halbworte wird dann gemäss der nunmehr vorliegenden Positionsangabe, die bei der Umsetzung des Speicherinhaltes des Teilspeichers R2 mittels des Umsetzers U erhalten wird, entweder in den linken oder den rechten Teil des betreffenden Speichergliedes, z.B. K14a oder K14b, eingeschrieben. Zwischen diesen beiden Schreibvorgängen, die innerhalb der Empfangszeitlage 16 abgewickelt werden und die die beiden Halbworte der Signalisierinformation betreffen, wird der Kontakt x betätigt, d.h. seine Stellung gewechselt.

Aufgrund der zuvor beschriebenen Schreibvorgänge stehen nun die den über die abgehende Zeitmultiplexleitung p geführten Kanälen entsprechenden Teilinformationen in der Reihenfolge in den Informationsspeichergliedern D1 bis D15 und D17 bis D31, wie sie gemäss den aufeinanderfolgenden Zeitlagen dieser Kanäle sukzessive nacheinander auszusenden sind. Während der Schreibbetrieb in der beschriebenen Weise gemäss den im Haltespeicher H gespeicherten Zuordnungsinformationen abgewickelt wird, erfolgt der Lesebetrieb mittels der Leseeinrichtung L zyklisch entsprechend den aufeinanderfolgenden Zeitlagen der über die ausgangsseitig angeschlossene Zeitmultiplexleitung p geführten Kanäle, die der Nachrichtenübertragung dienen. In dieser Weise werden die Inhalte der Informationsspeicherglieder mit Hilfe der zyklisch arbeitenden Leseeinrichtung L zur Aussendung über die Zeitmultiplexleitung p gebracht. Eine Ausnahme hierbei stellt die Zeitlage 16 dar, der das Informationsspeicherglied D16 entspricht. Erreicht die Leseeinrichtung L1 ihren Ausgang, der zwischen den beiden Ausgängen liegt, die den Informationsspeichergliedern D15 und D17 zugeordnet sind, so gibt sie über eine Steuerleitung y1 einen Befehl zur Leseeinrichtung L2 ab, die dem Signalisierinformationsspeicher K zugeordnet ist, und die bewirkt, dass der Speicherinhalt desjenigen Speichergliedes, z.B. K2a/K2b, gelesen wird, auf welches die Leseeinrichtung L2 zur Zeit eingestellt ist. Die Weiterschaltung der Leseeinrichtung L2 um einen Schritt, der einem Speicherglied des Signalisierinformationsspeichers K und somit einer Signalkanal-Teilinformation entspricht, erfolgt immer mit jedem Lesezyklus des ersten Informationsspeichers, z.B. immer nach einem vollen Umlauf der Leseeinrichtung L1. Hierzu ist der Steuerweg y2 vorgesehen, über den nach jedem vollem Umlauf der Leseeinrichtung L1 ein entsprechender Weiterschaltebefehl zur Leseeinrichtung L2 gegeben wird. Erreicht nun die Leseeinrichtung L1 ihren der Signalkanal-Zeitlage entsprechenden Ausgang, so wird über den Steuerweg y1 ein entsprechender Lesebefehl zur Leseeinrichtung L2 gegeben, die nun die im nächsten Signalisierinformationsspeicherglied, z.B. K3a/K3b gespeicherte, aus zwei Halbworten bestehende Signalisierinformation liest, auf welches die Leseeinrichtung L2 gerade eingestellt ist. Diese Signalisierinformation gelangt über die Gatterschaltung N zur Gatterschaltung P, über die sie zur Zeitmultiplexleitung p hin übertragen wird. Während dieser Zeit ist die Gatterschaltung M aufgrund der negierenden Wirkung der Gatterschaltung F undurchlässig. Regelmässig bei Erreichen desjenigen Informationsspeicherplatzes beim zyklischen Lesevorgang des Informationsspeichers D, der der Signalkanal—Zeitlage entspricht, wird der Lesevorgang des Signalisierinformationsspeichers K um einen einer Signalkanal-Teilinformation (zwei Halbworte) entsprechenden Schritt fortgesetzt, woraufhin wieder der Lesevorgang des Informationsspeichers D fortgesetzt wird. Diese Zwischenschiebung des Lesevorganges beim Signalisierinformationsspeicher K wird mit Hilfe eines über die Steuerleitung y1 übertragenen Steuerbefehles bewerkstelligt, der mit Hilfe der Leseeinrichtung L1 gewonnen wird. Dieser Steuerbefehl kann direkt von der Leseeinrichtung L1 zur Leseeinrichtung L2 übertragen werden. Er kann auch aus einer Adresse bestehen. Hierbei kann es sich um die Adresse des Informationsspeichergliedes D16 handeln. Es ist aber auch möglich, im Informationsspeicherglied D16 eine Hinweisangabe zu speichern und bei zyklischer Ansteuerung sämtlicher Informationsspeicherglieder nacheinander diese Hinweisangabe dem Informationsspeicherglied D16 zu entnehmen, wenn es von der Leseeinrichtung L1 erreicht wird, und diese Hinweisangabe zur Bildung des über den Steuerweg y1 zu übertragenden Steuerbefehles auszuwerten.

Mit Hilfe der anhand der Zeichnung beschriebenen Anordnung ist es möglich, die Signalisierinformation, die jedem der über die Zeitmultiplexleitung e übertragenen Kanäle zugeordnet ist, ebenso wie die diesen Kanälen zugeordneten Worte (Teilinformationen) zeitmultiplex zur Zeitmultiplexleitung p durchzuschalten. Die vermittlungstechnische Zuordnung erfolgt dabei jeweils pro Pulsrahmen für die der Nachrichtenübertragung dienenden Worte und pro Überpulsrahmen für die der Signalisierung dienenden Halbworte. Diese beiderlei vermittlungstechnischen Zuordnungen, und zwar einerseits der der Nachrichtenübertragung dienenden Kanäle zueinander und andererseits der der Signalisierung dienenden Halbworte innerhalb des Signalkanals, entsprechen einander.

Wie oben ausgeführt, dient von den über den Signalkanal übertragenen PCM-Worten das erste innerhalb eines Überpulsrahmens u.a. zur Übertragung des Überpulsrahmenkennungswortes. Das zweite dieser PCM-Worte umfasst die beiden der Signalisierung von Schaltkennzeichen dienenden Halbworte, die zwei ersten der als Nachrichtenkanäle dienenden übrigen Zeitkanäle zugeordnet sind. Als Beispiel wurde dabei angegeben, dass den beiden Halbworten jenes zweiten der innerhalb eines Überpulsrahmens über den Signalkanal übertragenen PCM-Worte die Kanäle 1 und 2 zugeordnet sind. In Abweichung davon kann aber diese Zuordnung auch anders festgelegt sein. Im Zusammenhang mit den im obigen ORANGE BOOK gegebenen Erläuterungen können z.B. auch die Kanäle 1 und 17 den beiden Halbworten des obigen zweiten PCM-Wortes zugeordnet sein, ferner die Kanäle 2 und 18 dem dritten PCM-Wort usw. In diesem Falle arbeitet die anhand der Zeichnung beschriebene Schaltungsanordnung in sinngemässer Weise.

**Patentansprüche**

1. Schaltungsanordnung für Zeitmultiplex-Fernmeldevermittlungsanlagen, insbesondere PCM-Fernsprechvermittlungsanlagen, mit Zeitmultiplexleitungen, auf denen jeweils eine Mehrzahl von Zeitkanälen (e, p) ein Zeitmultiplex bilden, und auf denen den Zeitkanälen unterschiedliche, sukzessive aufeinanderfolgende Zeitlagen zugeordnet sind, und auf denen die Zeitlagen im Pulsrahmen geordnet sind, und auf denen jedem einzelnen der Zeitkanäle in den verschiedenen aufeinanderfolgenden Pulsrahmen jeweils die gleiche Zeitlage zugeordnet ist, und mit mit Informationsspeichern (D) und Haltespeichern (H) ausgestatteten Zeitlagenvielfachen, über die Zeitkanäle auf einer eingangsseitig angeschlossenen Zeitmultiplexleitung (e) einzeln mit Zeitkanälen auf einer ausgangsseitig angeschlossenen Zeitmultiplexleitung (p) vermittelbar sind, und mit je einem pro Zeitmultiplex vorgesehenen und als einer von dessen Zeitkanälen zur Übertragung von einzeln den übrigen Zeitkanälen zugeordneten Schaltkennzeichen dienenden Signalkanal, dessen Zeitlagen über eine Mehrzahl von Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens zugeordnet ist, und mit je einem ersten Informationsspeicher (D0 bis D31 in D), der zur Durchschaltung der über die Nachrichtenkanäle übertragenen Teilinformationen dient, und bei dem der Lesezyklus der Pulsrahmendauer entspricht, und mit einem zweiten Informationsspeicher (K0a/K0b bis K15a/K15b in D), dessen Umlaufzyklus demgemäss einer Überpulsrahmendauer entspricht, die ein Mehrfaches der Pulsrahmendauer beträgt, und der zur Durchschaltung der Signalkanal-Teilinformationen zwischen den Signalkanälen der eingangsseitig und ausgangsseitig angeschlossenen Zeitmultiplexleitungen dient, dadurch gekennzeichnet, dass bei dem ersten Informationsspeicher einerseits der Schreibbetrieb gemäss im Haltespeicher (H) gespeicherten Informationsspeicher-Speichergliedadressen abgewickelt wird, welcher entsprechend den aufeinanderfolgenden Zeitlagen der über die eingangsseitig angeschlossene Zeitmultiplexleitung (e) geführten Kanälen zyklisch gelesen wird, und bei dem (ersten Informationsspeicher) andererseits der Lesebetrieb entsprechend den aufeinanderfolgenden Zeitlagen der über die ausgangsseitig angeschlossene Zeitmultiplexleitung (p) geführten Kanäle zyklisch abgewickelt wird, und dass die Weiterschaltung des zweiten Informationsspeichers (K0a/K0b bis K15a/K15b in D) im Lesebetrieb um einen einer Signalkanal-Teilinformation entsprechenden Schritt mit jedem Lesezyklus des ersten Informationsspeichers (D0 bis D31 in D) erfolgt, und dass im ersten Informationsspeicher (D0 bis D31 in D) die über die eingangsseitigen Kanäle eintreffenden Teilinformationen mit Ausnahme der Signalkanal-Teilinformation und an in dem zweiten Informationsspeicher (K0a/K0b bis K15a/K15b in D) entsprechend dem genannten Mehrfachen vorgesehenen mehreren Informationsspeicherplätzen (K0a/K0b bis K15a/K15b) die in der stets wiederkehrenden Reihenfolge ihrer Zeitlagen innerhalb jedes der Überpulsrahmen eintreffenden Signalkanal-Teilinformationen gemäss den im Haltespeicher (H) gespeicherten Informationsspeicher-Speichergliedadressen gespeichert werden, und dass regelmässig bei Erreichen der Signalkanal-Zeitlage — also einer der Pulsrahmen-Zeitlagen — beim zyklischen Lesevorgang des ersten Informationsspeichers (D0 bis D31 in D) der Lesevorgang des zweiten Informationsspeichers (K0a/K0b bis K15a/K15b in D) um einen einer Signalkanal-Teilinformation entsprechenden Schritt fortgesetzt wird, woraufhin wieder der Lesevorgang des ersten Informationsspeichers (D0 bis D31 in D) fortgesetzt wird.

2. Schaltungsanordnung nach Anspruch 1, dadurch gekennzeichnet, dass der zyklische Lesevorgang des zweiten Informationsspeichers (K0a/K0b bis K15a/K15b in D) aufgrund eines von einer Leseeinrichtung (L1) des ersten Informationsspeichers (D0 bis D31 in D) abgegebenen Steuerbefehles um einen einer Signalkanal-Teilinformation entsprechenden Schritt fortgesetzt wird.

3. Schaltungsanordnung nach Anspruch 2, dadurch gekennzeichnet, dass der Lesevorgang des zweiten Informationsspeichers (K0a/K0b bis K15a/K15b in D) um einen einer Signalkanal-Teilinformation entsprechenden Schritt aufgrund einer demjenigen Speicherglied (z.B. D16) des ersten Informationsspeichers (D0 bis D31 in D) zugeordneten Speichergliedadresse fortgesetzt wird, welches der Signalkanal-Zeitlage entspricht.

4. Schaltungsanordnung nach Anspruch 3, dadurch gekennzeichnet, dass der Lesevorgang des zweiten Informationsspeichers (K0a/K0b bis K15a/K15b in D) um einen einer Signalkanal-Teilinformation entsprechenden Schritt aufgrund einer Hinweisangabe fortgesetzt wird, die bei Erreichen des der Signalkanal-Zeitlage entsprechenden Speichergliedes (z.B. D16) des ersten Informationsspeichers (D0 bis D31 in D) durch dessen Leseeinrichtung (L1) gewonnen wird.

**Claims**

1. A circuit arrangement for time division multiplex telecommunications exchange systems, in particular PCM telephone exchange systems, with time division multiplex lines, on which a plurality of time channels (e, p) form a time division multiplex, and on which the time channels are assigned different, successive time slots, and on which the time slots are classified in the pulse frame, and on which each individual time channel is assigned the same time slot in the various, successive pulse frames, and with time slot multiplexers which are equipped with information stores (D) and holding stores (H) and via which time channels on a t.d.m. line (e) connected at the input end can be individually switched to time channels on a t.d.m. line (p) connected at the output end, and with a signal channel which is provided in respect of each time division multiplex and which serves as one of the time channels thereof for the transmission of switching characteristics individually assigned to the other time channels, the time slots of which signal channel are combined across a plurality of pulse frames to form super-pulse-frames which follow one another successively in the same way as the pulse frames and within which the other time channels, which serve as communications channels in respect of each individual connection, are assigned time slots within the super-pulse-frame, and with a first information store (D0 to D31 in D) which serves to switch through the items of subsidiary information which are transmitted via the communications channels, and in which the read cycle corresponds to the pulse frame duration, and with a second information store (K0a/K0b to K15a/K15b in D) whose cycle corresponds accordingly to the duration of one super-pulse-frame which amounts to a multiple of the pulse frame duration, and which second information store serves to switch through the items of signal channel subsidiary information between the signal channels of the t.d.m. lines connected at the input end and the t.d.m. lines connected at the output end, characterised in that in the first information store on the one hand the write operation is carried out in accordance with information store — storage element addresses stored in the hold store (H), which is cyclically read in accordance with the consecutive time slots of the channels which extend via the t.d.m. line (e) connected at the input end, and in which first information store on the other hand the read operation is carried out cyclically in accordance with the consecutive time slots of the channels which extend via the t.d.m. line (p) connected at the output end, and that the second infor-

mation store (K0a/K0b to K15a/K15b in D) is stepped on in the read operation by a step corresponding to an item of signal channel subsidiary information with each read cycle of the first information store (D0 to D31 in D), and that in the first information store (D0 to D31 in D) the items of subsidiary information incoming via the input-end channels — with the exception of the signal channel subsidiary information, and at a plurality of information storage positions (K0a/K0b to K15a/K15b) provided in the second information store (K0a/K0b to K15a/K15b in D) in accordance with the aforementioned multiple, the items of signal channel subsidiary information which arrive in the constantly recurring sequence of their times slots within each of the super-pulse-frames are stored in accordance with the information store — storage element addresses stored in the hold store (H), and that when-ever the signal channel time slot — i.e. one of the pulse frame time slots — is reached, during the cyclic read procedure of the first information store (D0 to D31 in D) the read process of the second information store (K0a/K0b to K15a/K15b in D) is regularly advanced by a step corresponding to an item of signal channel subsidiary information, whereupon the read process of the first information store (D0 to D31 in D) is recommenced.

2. A circuit arrangement as claimed in claim 1, characterised in that the cyclic read process of the second information store (K0a/K0b to K15a/K15b in D) is advanced by one step corresponding to an item of signal channel subsidiary information on the basis of a control command emitted from a read device (L1) of the first information store (D0 to D31 in D).

3. A circuit arrangement as claimed in claim 2, characterised in that the read process of the second information store (K0a/K0b to K15a/K15b in D) is advanced by a step corresponding to an item of signal channel subsidiary information on the basis of a storage element address which is assigned to that storage element (e.g. D16) of the first information store (D0 to D31 in D) which corresponds to the signal channel time slots.

4. A circuit arrangement as claimed in claim 3, characterised in that the read process of the second information store (K0a/K0b to K15a/K15b in D) is advanced by a step corresponding to an item of signal channel subsidiary information on the basis of a reference statement which is obtained when the storage element (e.g. D16), corresponding to the signal channel time slot, of the first information store (D0 to D31 in D) is reached by its read device (L1).

**Revendications**

1. Montage pour installations de télécommunications à multiplexage temporel, notamment pour installations de téléphonie MIC, comportant des lignes de multiplexage temporel, dans lesquelles une multiplicité de canaux (e, p) forment respectivement un multiplex temporel, différents créneaux temporels successifs sont associés aux canaux temporels, les créneaux temporels sont rangés dans la trame d'impulsions et le même créneau temporel est associé respectivement à chacun des canaux temporels dans les différentes trames d'impulsions successives, et comportant des multiples servant au multiplexage de créneaux temporels et équipés de mémoires d'informations (D) et de mémoires de maintien (H) et par l'intermédiaire desquels des canaux temporels présents dans une ligne de multiplexage temporel (e), raccordée du côté entrée, peuvent être mis en communication individuellement avec des canaux temporels présents dans une ligne de multiplexage temporel (p) raccordée du côté sortie, et comportant respectivement un canal de transmission de signaux prévu pour chaque multiplex temporel et qui est utilisé comme l'un des canaux temporels de ce multiplex pour la transmission de signaux caractéristiques de commutation associés individuellement aux autres canaux temporels, et dont les créneaux temporels sont réunis, sur une multiplicité de trames d'impulsions, pour former des trames d'impulsions de rang supérieur, se succédant de la même manière que les trames d'impulsions et à l'intérieur desquelles aux autres canaux temporels, qui servent de canaux de transmission d'informations individuellement pour les différentes liaisons, sont associés des créneaux temporels à l'intérieur de ladite trame d'impulsions de rang supérieur, et comportant respectivement une première mémoire d'information (D0 à D31 dans D), qui sert à la transmission directe des informations partielles transmises par l'intermédiaire des canaux de transmissions d'informations et dans laquelle le cycle de lecture correspond à la durée des trames d'impulsions, et une seconde mémoire d'informations (K0a/K0b à K15a/K15b dans D), dont le cycle de circulation correspond par conséquent à une durée de trame de rang supérieur, qui est égale à une multiple de la durée des trames d'impulsions, et qui sert à réaliser la transmission en direct des informations partielles des canaux de transmission de signaux entre les canaux de transmission de signaux des lignes de multiplexage temporel raccordées du côté entrée et du côté sortie, caractérisé par le fait que, dans la première mémoire d'informations, d'une part, l'opération d'enregistrement se déroule conformément à des adresses d'éléments de la mémoire d'informations mémorisées dans la mémoire de maintien (H) qui est lue cycliquement conformément aux créneaux temporels successifs des canaux circulant dans la ligne de multiplexage temporel (e) raccordé du côté entrée, et que, dans la première mémoire d'informations, d'autre part, l'operation de lecture se déroule cycliquement conformément aux créneaux temporels successifs des canaux acheminés par l'intermédiaire de la ligne de multiplexage temporel (e) raccordée du côté, et que l'avancement de la seconde mémoire d'informations (K0a/K0b à K15a/K15b dans D) pendant le fonctionnement de lecture s'effectue avec un pas, qui correspond à une information partielle des canaux de transmission de signaux, lors de chaque cycle de lecture de la première mémoire d'informations (D0 à D31 dans D), et que les informations partielles arrivant par l'intermédiaire des canaux situés du côté entrée, hormis l'information partielle des canaux de transmission de signaux, sont mémorisées dans la première mémoire d'informations (D0 à D31 dans D) et les informations partielles des canaux de transmission de signaux, qui arrivent conformément à la succession toujours répétitive de leurs créneaux temporels à l'intérieur de la trame d'impulsions de rang supérieur, sont mémorisées dans plusieurs cases (K0a/K0b à K15a/K15b) de la mémoire d'informations, prévues dans ladite seconde mémoire d'informations (K0a/K0b à K15a/K15b dans D) en fonction de ladite multiplicité, conformément aux adresses d'éléments de la mémoire d'informations mémorisées dans la mémoire de maintien (H), et que de façon régulière, lorsque le créneau temporel du canal de transmission de signaux — par conséquent l'un des créneaux temporels des trames d'impulsions — est atteint lors du processus de lecture cyclique de la première mémoire d'informations (D0 à D31 dans D), le processus de lecture de la seconde mémoire d'informations (K0a/K0b à K15a/K15b dans D) est prolongé sur un pas correspondant à une information partielle du canal de transmission de signaux, à la suite de quoi le processus de lecture de la première mémoire d'informations (D0 à D31 dans D) se poursuit.

2. Montage selon la revendication 1, caractérisé en ce que le processus de lecture cyclique de la seconde mémoire d'informations (K0a/K0b à K15a/K15b dans D) est prolongé d'un pas correspondant à une information partielle du canal de transmission de signaux, sur la base d'une instruction de commande délivrée par un dispositifs de lecture (L1) de la première mémoire d'informations (D0 à D31 dans D).

3. Montage suivant la revendication 2, caractérisé par le fait que le processus de lecture de la seconde mémoire d'informations (K0a/K0b à K15a/K15b dans D) est prolongé d'un pas correspondant à une information partielle du canal de transmission, sur la base d'une adresse d'élément de mémoire associée à l'élément de mémoire (par exemple D16) de la première mémoire d'informations (D0 à D31 dans D), qui correspond au créneau temporel du canal de transmission de signaux.

4. Montage suivant la revendication 3, caractérisé par le fait que le processus de mémoire de la seconde mémoire d'informations (K0a/K0b à K15a/K15b dans D) est prolongé d'un pas correspondant à une information partielle du canal de transmission de signaux, sur la base d'une indication qui est obtenue par le dispositif de lecture (L1) de la première mémoire d'informations (D0 à D31 dans D), lorsque l'élément (par exemple D16) de cette mémoire, qui correspond au créneau temporel du canal de transmission de signaux, est atteint.